# EUROPEAN PATENT SPECIFICATION

(11) **EP 3 026 942 B1**
(45) Date of publication and mention of the grant of the patent: **27.09.2017**
(21) Application number: 14195403.2
(22) Date of filing: 28.11.2014
(51) Int. Cl.: H04W 8/00, H04W 76/02

(54) **Discovery of neighbour peers and connection establisment for a peer to peer communication**
Entdeckung von Nachbarknoten und Verbindungsaufau für eine Peer-to-Peer Kommunikation
Découverte de noeuds voisins et établissement de connection pour une communication noeud à noeud

(43) Date of publication of application: 01.06.2016
(73) Proprietor: Nokia Technologies OY, 02610 Espoo (FI)
(72) Inventor: Reunamäki, Jukka, 33820 Tampere (FI); Palin, Arto, 37830 Viiala (FI)
(74) Representative: Berggren Oy, Helsinki & Oulu

(56) References cited:
- WO-A1-2013/083868
- US-A1- 2011 021 142
- US-B1- 7 356 347

## Description

### TECHNICAL FIELD

The example and non-limiting embodiments of the present invention relate to device discovery, device selection and connection creation in context of wireless communication.

### BACKGROUND

Establishing a wireless connection between two devices, including e.g. steps of device discovery, device selection and connection creation is in many occasions a complicated operation. Multitude of different communication techniques, communication protocols and user-interface components for controlling use of these techniques/protocols may make it uncomfortable or even difficult for a user of a device to successfully perform the preparatory steps required for establishing the wireless connection.

In related art, WO 2013/083868 A1 discloses an apparatus, a computer program product and a method provided for device and/or user identification. The example provided therein comprises receiving, at an apparatus, a wireless signal comprising at least one of an address or an indication identifying a wireless communication device initiating the wireless signal, transmitting a query to a remote network entity, the query including at least one of the received address or indication identifying the wireless communication device and an indication associated with identity of the apparatus, and receiving a response to the query including information relating to identity of the wireless communication device if an association exists between the apparatus and the wireless communication device.

Further in related art, US 2011/021142 A1 discloses a dual-mode BLE device that identifies idle intervals within Bluetooth BR/EDR traffic communications. The identified idle intervals are used by the dual-mode BLE device to concurrently perform various BLE activities. For example, advertising packet transmissions, advertising packet scanning, connection setup, and/or data packet communication may be concurrently performed within identified idle intervals within the Bluetooth BR/EDR traffic communications. Packet transmission timing, advertising interval, scan window, and/or packet size are determined based on the identified idle intervals within the Bluetooth BR/EDR traffic communications. A scan window is adjusted based on timing of expected advertising transmissions and/or advertising interval(s) for saving power. BLE packets and Bluetooth BR/EDR packets may be detected in a single advertising channel.; Maximal payload size is set based on the identified idle intervals within Bluetooth BR/EDR traffic communications. As a slave, the dual-mode BLE device updates connection parameters based on the identified idle intervals within Bluetooth BR/EDR traffic communications.

### SUMMARY

According to an example embodiment, an apparatus is provided, the apparatus comprising wireless communication means configured to receive one or more device discovery messages, to transmit, in response to receiving at least one device discovery message, one or more device discovery response messages to a source of said at least one device discovery message, and to carry out, in response to receiving at least one device discovery message, a further signaling with said source, said further signaling comprising receiving one or more further inbound signaling messages that carry information related to connection creation with said source. The apparatus further comprises evaluation means for determining, in dependence of said one or more further signaling messages received from said source, whether a connection creation with said source is to be initiated, and said wireless communication means is further configured to, in response to said determination being affirmative, reject a connection request from said source by ignoring inbound connection request messages received from said source and transmit one or more outbound connection request messages to initiate the connection creation with said source.

According to another example embodiment, a method for facilitating establishment of a wireless connection is provided, the method comprising receiving, in a first device, one or more device discovery messages and performing the following in response to the first device receiving at least one device discovery message: transmitting, from the first device, one or more device discovery response messages to a source of said at least one device discovery message and carrying out a further signaling with said source, said further signaling comprising the first device receiving one or more further inbound signaling messages that carry information related to connection creation with said source. The method further comprises determining, in the first device, in dependence of said one or more further signaling messages received from said source, whether a connection creation with said source is to be initiated, and in response to said determination being affirmative, rejecting a connection request from said source by ignoring, in the first device, inbound connection request messages received from said source and transmitting, from the first device, one or more outbound connection request messages to initiate the connection creation with said source.

According to another example embodiment, a computer program comprising computer readable program code configured to cause performing at least the following when said program code is executed on a computing apparatus: receiving one or more device discovery messages, transmitting, in response to receiving at least one device discovery message, one or more device discovery response messages to a source of said at least one device discovery message, carrying out, in response to receiving said at least one device discovery message, a further signaling with said source, said further signaling comprising receiving one or more further inbound signaling messages that carry information related to connection creation with said source, determining, in dependence of said one or more further signaling messages received from said source, whether a connection creation with said source is to be initiated, and in response to said determination being affirmative, rejecting a connection request from said source by ignoring inbound connection request messages received from said source and transmitting one or more outbound connection request messages to initiate the connection creation with said source.

The computer program referred to above may be embodied on a volatile or a non-volatile computer-readable record medium, for example as a computer program product comprising at least one computer readable non-transitory medium having program code stored thereon, the program which when executed by an apparatus cause the apparatus at least to perform the operations described hereinbefore for the computer program according to an example embodiment of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

### BRIEF DESCRIPTION OF FIGURES

The embodiments of the invention are illustrated by way of example, and not by way of limitation, in the figures of the accompanying drawings.
Figure 1 schematically illustrates some components of a wireless communication arrangement together with some components of devices according to an example embodiment.
Figure 2 illustrates a method according to an example embodiment.
Figure 3 illustrates a method according to an example embodiment.
Figure 4 illustrates an example of signaling exchange between two devices according to an example embodiment.
Figure 5 illustrates a method according to an example embodiment.
Figure 6a illustrates an example of signaling exchange between two devices according to an example embodiment.
Figure 6b illustrates an example of signaling exchange between two devices according to an example embodiment.
Figure 7 illustrates a method according to an example embodiment.
Figure 8 illustrates an example of signaling exchange between two devices according to an example embodiment.

### DESCRIPTION OF SOME EMBODIMENTS

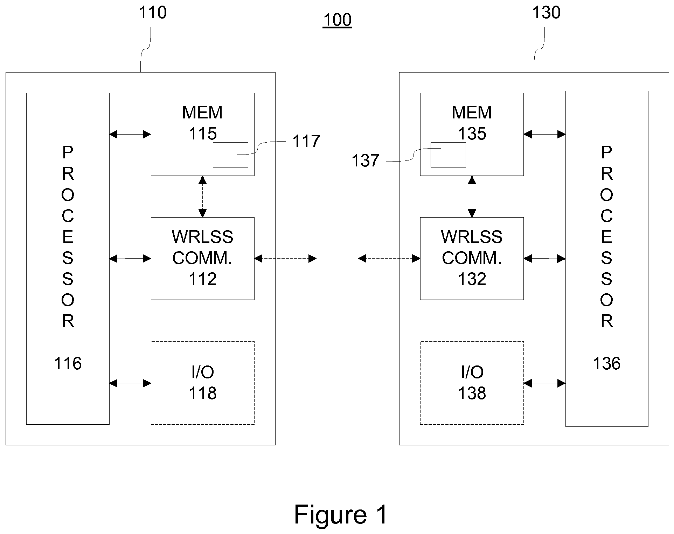

Figure 1 schematically illustrates some components and/or entities of a wireless communication arrangement 100 to depict an exemplifying framework for one or more embodiments of the present invention. In the communication arrangement 100, a first device 110 and a second device 130 are arranged to communicate with each other over one or more wireless communication channels in order to carry out a device discovery procedure, possibly followed by a further signaling, a connection creation and a connection establishment between the two devices 110, 130, as will be described in more detail in the examples provided in the following.

The components of the communication arrangement 100 depicted in Figure 1 provide a non-limiting example that depicts a single first device 110 and a single second device 130 for improved clarity of illustration and for improved clarity and for brevity of description. However, in general there may be one or more first devices 110 and one or more second devices 130, where the device discovery and the further signaling are carried out to enable connection creation and establishment between a certain first device 110 and a certain second device 130 in response to one or more messages exchanged with these device during the device discovery procedure and/or during the further signaling indicating a condition that is considered suitable for creating and/or establishing connection between the certain first and second devices 110, 130. In the following, the term first device 110, when used in the singular form, is applied to jointly refer to any of the one or more first devices 110 unless explicitly stated otherwise. Similarly, the term second device 130, when used in the singular form, is applied to jointly refer to any of the one or more second devices 130 unless explicitly stated otherwise.

The first device 110 and the second device 130 are typically, but not necessarily, provided as a mobile devices. As a few non-limiting examples, the first device 110 may be provided as an accessory device, such as an audio input/output device (e.g. a headset, headphones, a loudspeaker arrangement) or a sensor device, whereas the second device 130 may be provided as a mobile user device, such as a mobile phone, a smartphone, a music player, a media player, a tablet computer, a laptop computer, a portable navigation device, etc. As another example, either the first device 110 or the second device - or even each of the first and second devices 110, 130 - may be provided as a stationary device, in other words as a non-mobile device installed in its operating environment in a fixed manner. The first and second devices 110, 130 are arranged to apply an automated or semi-automated procedure to establish a wireless connection therebetween, as will be described in more details in the following examples.

Figure 1 further schematically illustrates some components of an exemplifying first device 110 that may be relevant for the description of some embodiments of the present invention. The first device 110 comprises a wireless communication portion 112 for wireless communication with other devices. The wireless communication portion 112 comprises one or more wireless communication apparatuses. A wireless communication apparatus of the wireless communication portion 112 may be also considered as a wireless communication means. A wireless communication apparatus of the wireless communication portion 112 may enable, for example, wireless communication with other devices using a short-range wireless communication technique or protocol that provides a point-to-point wireless connection with another device. The first device 110 is hence capable of communicating with other devices that are equipped with communication apparatus using the same technique/protocol, e.g. with the second device 130.

The first device 110 further comprises a processor 116 and a memory 115 for storing data and computer program code 117. The first device 110 may further comprise user I/O (input/output) components 118 that may be arranged, possibly together with the processor 116 and a portion of the computer program code 117, to provide a user interface for receiving input from a user of the first device 110 and/or providing output to the user of the first device 110. The processor 116 may be arranged to control operation of the first device 110 e.g. in accordance with the computer program code 117 stored in the memory 115 and possibly further in accordance with the user input received via the user I/O components 118 and/or in accordance with information received via the wireless communication portion 112. The memory 115 and a portion of the computer program code 117 stored therein may be further arranged to, with the processor 116, to provide a control function for controlling operation of a wireless communication apparatus of the wireless communication portion 112, possibly together with a control portion or a control function that may be provided within the respective wireless communication apparatus (which will be described later in this text). These control functions may be, separately or jointly, referred to as control means (of the first device 110). The first device 110 may comprise further components or portions in addition to those depicted in Figure 1.

Figure 1 further schematically illustrates some components of an exemplifying second device 130 that may be relevant for the description of some embodiments of the present invention. The second device 130 comprises a wireless communication portion 132 similar to the wireless communication portion 112. Hence, a wireless communication apparatus of the wireless communication portion 132 may, for example, enable the short-range wireless communication with the first device 110 and/or with other devices equipped with communication means using the same technique/protocol.

The second device 130 further comprises a processor 136 and a memory 135 for storing data and computer program code 137. The second device 130 may further comprise user I/O (input/output) components 138 that may be arranged, together with the processor 136 and a portion of the computer program code 137, to provide a user interface for receiving input from a user of the second device 130 and/or providing output to the user of the second device 130. The processor 136 may be arranged to control operation of the second device 130 in accordance with the computer program code 137 stored in the memory 135 and possibly further in accordance with the user input received via the user I/O components 138 and/or in accordance with information received via the wireless communication portion 132. The memory 135 and a portion of the computer program code 137 stored therein may be further arranged, with the processor 136, to provide a control function for controlling operation of a wireless communication apparatus of the wireless communication portion 132, possibly together with a control portion of a control function that may be provided within the respective wireless communication apparatus (which will be described later in this text). These control functions may be, separately or jointly, referred to as control means (of the second device 130). The second device 130 may comprise further components or portions in addition to those depicted in Figure 1.

As described in the foregoing, each of the wireless communication portions 112, 132 comprises one or more respective wireless communication apparatuses. A wireless communication apparatus may be provided e.g. as a respective chipset and/or as a respective communication module. For clarity and brevity of description, each wireless communication apparatus comprised in the wireless communication portion 112, 132 may be considered as a single logical entity that may also be capable of processing at least some of the information received via the wireless connection and/or at least some of the information that is to be transmitted via the wireless connection without external control from other components of the respective device 110, 130 (e.g. from the processor 116, 136, respectively). In an embodiment, a wireless communication apparatus of the wireless communication portion 112, 132 comprises e.g. a wireless transceiver portion for wireless communication and a control portion (or a control function) for controlling operation of the respective wireless transceiver portion and for processing information received/transmitted via the respective wireless transceiver portion. Such a control function may be provided by hardware means, by software means or by a combination of hardware means and software means. As an example in this regard, the wireless communication apparatus may comprise a memory and a processor, and a computer program code stored in the memory may be arranged to, with the processor, provide the control function for controlling operation of the respective wireless communication apparatus either independently or jointly with the control function provided by the memory 115, 135, the computer program 117, 137 and the processor 116, 136 of the respective device 110, 130.

The wireless connection between a wireless communication apparatus of the wireless communication portion 112 and a respective wireless communication apparatus of the wireless communication portion 132 may be provided by employing a suitable short-range wireless communication technique or protocol. The term short-range wireless communication as used herein refers to a wireless communication technique or protocol that enables typical operating range in the scale of tens of meters, e.g. up to 100 meters. However, especially in an indoor environment, the operating range of such short-range wireless communication technique/protocol may be significantly shorter e.g. due to walls and other stationary structures as well as furniture etc. that are likely to partially block or interfere with the radio communication between wireless communication portions. On the other hand, in favorable conditions in outdoor use the operating range may extend to several hundreds of meters.

Examples of such wireless techniques/protocols include the Bluetooth (BT) Basic Rate / Enhanced Data Rate (BR/EDR) and the Bluetooth Low Energy (BLE) protocols, both specified e.g. in the Bluetooth Specification Version 4.1, Covered Core Package version 4.1 (publication date 3 December 2013), incorporated herein by reference in its entirety. In the following, this document is referred to as a Bluetooth Specification.

While a number of short-range wireless communication techniques/protocols known in the art are applicable in the framework of the communication arrangement 100, in the following some aspects of various embodiments of the present invention are described with references to the BT BR/EDR and BLE protocols. However, these protocols serve as illustrative and non-limiting examples in this regard, and the description generalizes into any wireless communication protocol.

In order to facilitate description of various embodiments of the present invention, e.g. following operational states of a wireless communication apparatus (of the wireless communication portion 112, 132) are applied:
- *a discoverable state* of a wireless communication apparatus is an operational state in which the wireless communication apparatus is discoverable by other wireless communication apparatuses;
- *a discovering state* of a wireless communication apparatus is an operational state in which the wireless communication apparatus is attempting to discover other wireless communication apparatuses;
- *a connectable state* of a wireless communication apparatus is an operational state in which the wireless communication apparatus connectable by other wireless communication apparatuses;
- *a connecting state* of a wireless communication apparatus is an operational state in which the wireless communication apparatus is attempting to create a connection with another wireless communication apparatus;

In general, a wireless communication apparatus of the wireless communication portion 112, 132 may be operated in a single one of the operational states described above or it may be simultaneously operated in two or more of the operational states described above. Operation in each of the discoverable state, the discovering state, the connectable state and the connecting state may be implemented in one of a number of ways. Illustrative examples in this regard are provided later in this text.

In the following, this text may simply refer to a device 110, 130 operating (or being operated under control of the respective control function or control means) in a certain state (e.g. in one of the states described above) when referring to an operational state of a wireless communication apparatus of the respective wireless communication portion 112, 132. Along similar lines, this text may refer to a device 110, 130 carrying out a certain operation (e.g. receiving and/or transmitting certain message(s)) when describing the act of a wireless communication apparatus of the respective wireless communication portion 112, 132 carrying out said certain operation under control of the respective control function or control means. This approach is believed to improve editorial clarity and readability of the text, while the technical meaning of these expressions remains clear.

A pair of devices that are within an operating range from each other with one device operating in the discoverable state and the other device operating in the discovering state may carry out a discovery procedure that involves detecting presence of the other device as well as requesting and acquiring information related to the connection creation and establishment between the pair of devices and/or identities of the devices. Along similar lines, a pair of devices that are within an operating range from each other with one device operating in the connectable state and the other device operating in the connecting state may carry out a connection creation procedure that involves detecting presence of the other device as well as requesting and acquiring (further) information related to connection creation or establishment between the pair of devices and/or identities of the devices, possibly followed by connection creation between the pair of devices.

In a typical scenario, a device discovery procedure initiated by a certain device, in case of successful device discovery, is followed by a connection creation procedure initiated by the certain device. In other words, the certain device initiates the connection creation procedure (i.e. requests connection) by transmitting one or more connection request messages and the discovered device either accepts the requested connection by responding with one or more connection request response messages or refuses the requested connection by ignoring (e.g. failing to respond to) the connection request message(s) received from the certain device.

As an overview of one or more embodiments of the present invention, the first device 110 may be operated in an operational state where it is able to detect the second device 130 operating in the discovering state, in other words to detect the second device carrying out a device discovery procedure. In response to detecting the second device 130 operating in the discovering state, the first device 110 may carry out further signaling with the second device 130 in order to obtain further information for use as basis for making a decision concerning subsequent initiation of connection creation with the second device 130. Depending on the outcome of this decision, the first device 110 either proceeds with initiating creation of a wireless connection with the second device 130 or refrains from doing so. Due to the second device 130 carrying out the initial device discovery but the first device 110 initiating the connection creation, this approach may be referred to as reverse action. In the course of the further signaling referred to above, the first device 110 may refuse a preliminary connection requested by the second device 130 and make the decision concerning initiation of the connection with the second device 130 on basis of connection creation related signaling messages received from the second device 130. As another example, the first device 110 may accept the preliminary connection requested by the second device 130 and make the decision concerning initiation of the connection with the second device 130 on basis of signaling messages received via the preliminary connection.

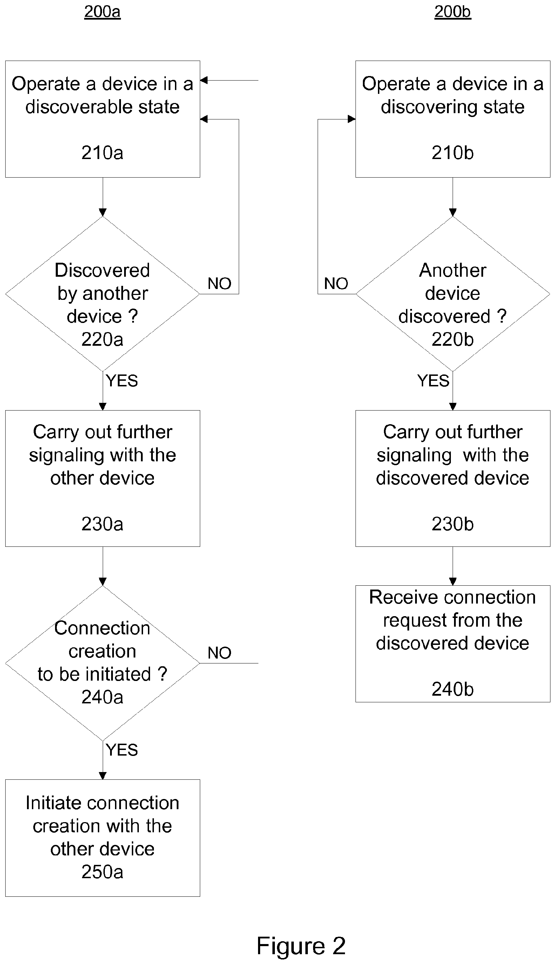

In order to describe various embodiments of the present invention in more detail, Figure 2 illustrates exemplifying methods 200a and 200b for facilitating establishment of a wireless connection between the first device 110 and the second device 130 using the reverse action approach. The method 200a may be carried out, for example, in the first device 110 and the method 200b may be carried out, for example, in the second device 130.

The method 200a proceeds from the first device 110 operating in the discoverable state, as indicated in block 210a. In parallel, the method 200b proceeds from the second device 130 operating in the discovering state, as indicated in block 210b. While operating in the discovering state, the second device 130 may at the same time operate in the discoverable state and/or in the connectable state.

Continuing with the method 200a, the first device 110 determines whether it has been discovered by the second device 130, as indicated in block 220a. In response to the determination of block 220a being non-affirmative, the first device 110 continues to operate in the discoverable state (block 210a), whereas in response to the determination of block 220a being affirmative, the first device 110 may carry out a further signaling with the second device 130, as indicated in block 230a. The determination of block 220a may apply one or more further criteria, e.g. to determine whether it has been discovered by another device of certain type and/or by another device of certain identity (indicated e.g. an address or part thereof).

In parallel, according to the method 200b the second device 130 determines whether it has discovered the first device 110, as indicated in block 220b. In response to the determination of block 220b being non-affirmative, the second device 130 continues to operate in the discovering state (block 210b), whereas in response to the determination of block 220b being affirmative, the second device 130 proceeds to carry out the further signaling with the first device 110, as indicated in block 230b. The determination of block 220b may apply one or more further criteria, e.g. to determine whether it has discovered another device of certain type and/or another device of certain identity (indicated e.g. one having an address or part thereof).

The further signaling (blocks 230a, 230b) may comprise the second device 130 transmitting one or more further signaling messages to the first device 110 and/or receiving one or more further signaling messages from the first device 110, as well as the first device 110 transmitting one or more further signaling messages to the second device 130 and/or receiving one or more further signaling messages from the second device 130. The further signaling messages may comprise, for example, messages related to device discovery and/or connection creation or establishment between the devices 110, 130 as well as messages carrying information regarding identity associated with at least one of the devices 110, 130. Examples concerning the information content and/or other characteristics of the further signaling messages will be provided later in this text.

The further signaling may be carried out, for example, with the first device 110 operating in the discovering state and the second device 130 operating in the discoverable state. As another example, the further signaling may involve the first device 110 operating in the connectable state and the second device 130 operating in the connecting state 130. At the same time, the first device 110 may continue operating also in the discoverable state and/or the second device 130 may operate (also) in the connectable state.

The further signaling is carried out for the purpose of the first device 110 obtaining further information related to connection creation with the second device 130, which obtained information may be employed to determine whether creation of a wireless connection with the second device 130 is to be initiated. As an example, this obtained information may comprise information received at the first device 110 in one or more further signaling messages originating from the second device 130 and/or information derived in the first device 110 on basis of characteristics of one or more received further signaling messages received from the second device 130. The obtained information may comprise information related, for example, to the type of the second device, to the identity of the second device 130 and/or to quality or strength of the connection between the first device 110 and the second device 130.

During or after the further signaling (block 230a), the first device 110 determines, in dependence of the obtained information, whether creation of the wireless connection to the second device 130 is to be initiated, as indicated in block 240a. The determination may be carried out by evaluation means that may be provided as part of the control function of the respective wireless communication apparatus of the wireless communication portion 112 and/or as part of the control function of the first device 110. In this regard, the obtained information may be employed directly and/or indirectly to evaluate whether one or more conditions or criteria related to the feasibility of connection creation with the second device 130 are met. As an example, the obtained information may be employed directly by determining, for one or more pieces of the obtained information, whether the respective piece of obtained information meets respective one or more predefined criteria. As another example, the obtained information may be employed indirectly by presenting one or more pieces of the obtained information to a user of the first device 110 (via the user interface) and receiving a user selection whether to proceed with the connection creation.

In case the determination of block 240a is non-affirmative, the first device returns to operate (or continues operating) in the discoverable state (block 210a), whereas in response to finding the determination of block 240a affirmative, the first device 110 initiates connection creation with the second device 130, as indicated in block 250a. This connection creation attempt implements the reverse action referred to in the foregoing. If successful, the connection creation may be further followed by connection establishment between the first device 110 and the second device 130 and transfer of data between the two devices using the established wireless connection. Consequently, the second device 130 may receive one or more connection request messages from the first device 110, as indicated in block 240b, and it may further proceed with connection creation (possibly followed by the connection establishment and data transfer) with the first device 110.

As described in the foregoing, the initiation of the connection creation of block 250a may be automated such that no user action is needed but the first device 110 proceeds with the connection creation and connection establishment without explicit instruction or command (via the user interface of the device 110) from the user of the device, e.g. by directly determining whether one or more pieces of the obtained information pertaining to the second device 130 meets respective one or more predefined criteria. Such an automated procedure may further involve providing, via the user interface of the device 110, a notification informing the user about the connection that is being or that has been created and/or established. The notification may indicate, for example, the name or other identifier associated with the second device 130. Such an automated procedure may be applied e.g. in a scenario where the first device 110 has already earlier established pairing or bonding with the second device 130.

As another example, the initiation of the connection creation of block 250a may be semi-automated such that before proceeding with the connection creation or connection establishment a question or prompt is provided via the user interface of the first device 110, the question or prompt providing a user of the device with an option to accept or refuse connection with the second device 130, e.g. by presenting (via the user interface) one or more pieces of the obtained information to a user of the first device 110 and by receiving (via the user interface) a user selection whether to proceed with the connection creation. The question or prompt may indicate, for example, the name or other identifier associated with the second device 130. Consequently, the first device 110 may proceed with the connection creation and connection establishment only in response to the user having accepted the connection with the second device 130 to be created and established.

In this text (e.g. in context of the methods 200a and 200b as well as further exemplifying methods described later in this text), a message transmitted from a device 110, 130 over a wireless communication channel (e.g. using a wireless communication apparatus of the respective wireless communication portion 112, 132) may be considered (and referred to) as an *outbound* message, whereas a message received in a device 110, 130 over a wireless communication channel (e.g. using a wireless communication apparatus of the respective wireless communication portion 112, 132) may be considered (and referred to) as an *inbound* message.

The first device 110 may be caused to initiate operation according to the method 200a e.g. by a user of the first device 110 activating the respective functionality or operational mode via the user interface. As another example, operation according to the method 200a may be initiated by another process running in the first device 110 (either due to a user action via the user interface or as a pre-programmed action without a direct user action). As a further example, operation according to the method 200a may be a default operational mode of the first device 110 in a scenario where the first device 110 is not bonded with any other device. Similar mechanisms may be provided in the second device 130 in order to initiate operation according to the method 200b.

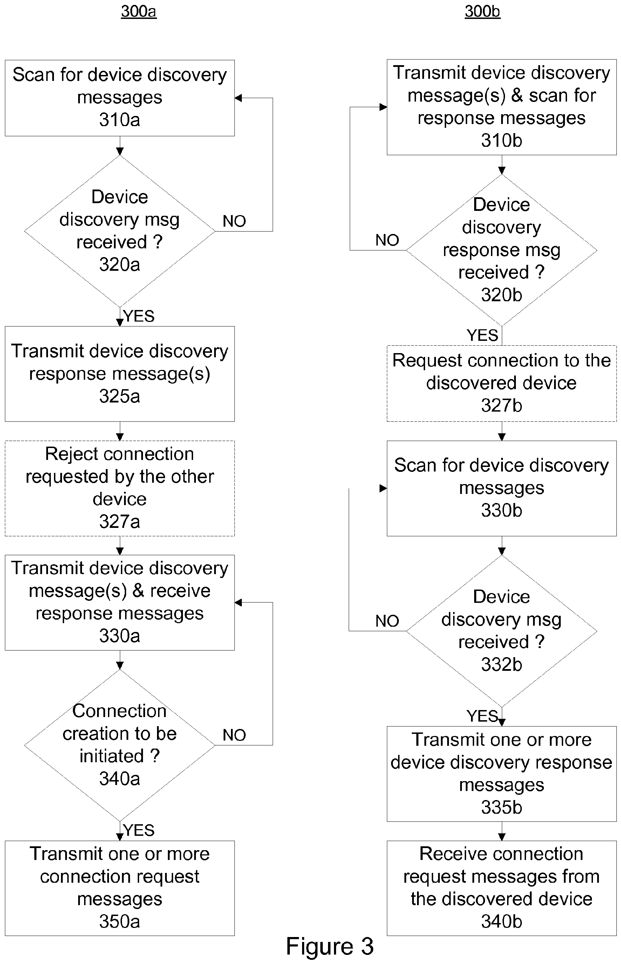

Figure 3 illustrates exemplifying methods 300a and 300b for facilitating establishment of a wireless connection between the first device 110 and the second device 130 in the framework of the methods 200a and 200b, respectively. The method 300a may be carried out, for example, in the first device 110 and the method 300b may be carried out, for example, in the second device 130.

The method 300a proceeds from the first device 110 operating in the discoverable state, which includes scanning for device discovery messages from other devices, as indicated in block 310a. In parallel, the method 300b proceeds from the second device 130 operating in the discovering state, which includes transmitting one or more device discovery messages and scanning for respective device discovery response messages, as indicated in block 310b.

In context of the methods 300a and 300b the device discovery message(s) serve both as a query regarding presence of any devices of a desired type or mode (that may be indicated in the device discovery messages) and as a request for information related to connection creation or establishment with a discovered other device, whereas the device discovery response message(s) serve as an indication of the presence of the device transmitting the device discovery response messages and carry the requested connection creation or establishment information. Herein, a device discovery response message may carry an identification associated with the device 110, 130 transmitting the message, e.g. an address of the wireless communication apparatus of the wireless communication portion 112, 132 transmitting the message or a name associated with the wireless communication apparatus of the wireless communication portion 112, 132 and/or the respective device 110, 130. While operating in the discovering state, the wireless communication apparatus of the wireless communication portion 132 may at the same time operate in the discoverable state by scanning for device discovery messages from other devices and/or in the connectable state by scanning for connection request messages from other devices.

The method 300a continues with the first device 110 determining whether it has been discovered by another device, which includes checking whether one or more device discovery messages from the second device 130 have been received, as indicated in block 320a. In response to finding the determination of block 320a non-affirmative, the first device 110 continues scanning for the device discovery messages (block 310a). In response to finding the determination of block 320a affirmative, the first device 110 proceeds to transmit one or more device discovery response messages to the second device 130, as indicated in block 325a.

In parallel, the method 300b proceeds to the second device 130 determining whether it has discovered the first device 110, which comprises determining whether one or more device discovery response messages from the first device 110 have been received, as indicated in block 320b. The determination of block 320b may apply one or more further criteria, e.g. to determine whether the device discovery response messages have been received from another device of certain type and/or another device of certain identity (indicated e.g. an address or part thereof). In response to finding the determination of block 320b non-affirmative, the second device 130 continues transmitting the device discovery messages and scanning for the device discovery response messages (block 310b). In response to finding the determination of block 320b affirmative and hence having detected presence of the first device 110, the second device 130 may optionally request connection creation with the first device 110, as indicated in block 327b. This may involve the second device 130 transmitting one or more connection request messages to the first device 110 to initiate the connection creation. In parallel, the method 300a optionally comprises the first device 110 rejecting the connection requested by the second device 130, as indicated in block 327a. This may involve, for example, the first device 110 receiving the connection request messages from the second device 130 but ignoring the messages and hence refraining from responding with one or more connection request response messages.

Continuing with the method 300a, the first device 110 proceeds to the further signaling, which in the method 300a includes the first device 110 transmitting one or more device discovery messages and (scanning for and) receiving respective device discovery response messages during its operation in the discovering state, as indicated in block 330a. At the same time, the first device 110 may continue to operate also in the discoverable state. In parallel, in the course of the method 300b the second device 130 proceeds to the further signaling, which in the method 300b includes the second device 130 (scanning for and) receiving device discovery messages from other devices during its operation in the discoverable state, as indicated in block 330b.

The second device 130 further determines whether it has been discovered by another device, which includes checking whether one or more device discovery messages from the first device 110 have been received, as indicated in block 332b. In response to finding the determination of block 332b non-affirmative, the second device 130 continues scanning for the device discovery messages (block 330b). As an example in this regard, the scanning (block 330b) and determining (block 332b) may be continued at most for a predefined period of time, after which, if the determination of block 332b continues to be non-affirmative, the second device 130 returns to transmitting device discovery messages and scanning for device discovery response messages (block 310b). In response to finding the determination of block 332b affirmative, the second device 130 proceeds to transmitting one or more device discovery response messages to the first device 110, as indicated in block 335b. Moreover, in case the second device is not currently operating (also) in the connectable state, the operation of block 335b may further involve the second device 130 starting to operate also in the connectable state, which includes scanning for connection request messages from other devices.

Hence, in context of the methods 300a and 300b the further signaling messages exchanged during the further signaling (cf. blocks 230a, 230b) comprise device discovery messages transmitted from the first device 110 and device discovery response messages transmitted from the second device 130. During or after the further signaling, the first device 110 determines, in dependence of the device discovery response messages received at the first device 110, whether creation of a wireless connection with the second device 130 is to be initiated, as indicated in block 340a. In particular, this determination may depend on information the first device 110 receives in the device discovery response messages and/or information the first device 110 derives on basis of characteristics of one or more received device discovery response messages. Some examples in this regard are described in the foregoing in context of the method 200a and more detailed examples will be described later in this text. There may be a requirement that the method 300a proceeds to block 340a only after the first device 110 having received a device discovery response message from the second device 130 as a response to at least a predetermined number of device discovery messages transmitted from the first device 130.

In case the outcome of the determination of block 340a is non-affirmative, the first device 110 returns to scanning for device discovery messages from other devices (block 310a). As an example in this regard, the first device 110 may continue to operate in the discovering state (block 330a) at most for a predefined period of time, after which, if the determination of block 340a continues to be non-affirmative, the first device 110 returns to scanning for device discovery messages from other devices (block 310a). In response to finding the outcome of the determination of block 340a affirmative, the method 300a proceeds to the first device 110 initiating connection creation with the second device 130, which includes transmitting one or more connection request messages to the second device 130, as indicated in block 350a.

Consequently, the second device 130 may receive one or more connection request messages from the first device 110, as indicated in block 340b, and it may accept the requested connection and hence proceed with connection creation by transmitting one or more connection request response messages to the first device 110. The transmission of the connection of the connection request response messages may be followed by connection establishment and data transfer with the first device 110.

As an example regarding the determination in block 340a, the determination whether creation of a wireless connection with the second device 130 is to be initiated may comprise extracting an identification of the second device 130 from a device discovery response message received from the second device 130 and determining whether the extracted identification indicates one of one or more predefined identities. This identification may comprise, for example, an address of the second device 130 or part thereof, a name associated with the second device 130, etc. Consequently, the first device 110 may proceed to initiate connection creation with the second device 130 (block 350a) in response to discovering a known device, e.g. one that has already been paired with the first device 110.

As another example, the determination whether creation of the wireless connection with the second device 130 is to be initiated (block 340a) may comprise extracting the identification of the second device 130 from a device discovery response message received from the second device 130, presenting (via the user interface) the extracted identification to the user of the first device 110 together with an option to accept or refuse connection with the second device 130, and receiving a user selection indicating whether the user wishes to accept or refuse the connection the connection. Consequently, the first device 110 may proceed to initiate connection creation with the second device 130 (block 350a) in response to user selection indicating acceptance of the connection with the discovered device (which may or may not be a previously encountered device).

As a further example, in addition to or as an alternative to the identity-based determination approaches described above, the determination whether creation of the wireless connection with the second device 130 is to be initiated (block 340a) may comprise the first device 110 computing a received signal strength (RSSI) for one or more device discovery response messages received from the second device 130 and deriving a RSSI value on basis of these computed RSSIs. As a few examples, the RSSI value may be derived as an average, as a median, as a minimum or as a maximum of the RSSIs computed for one or more received device discovery response messages. Further in this regard, the determination of block 340a may further comprise the first device 110 determining whether the computed RSSI value exceeds a predefined RSSI threshold. Consequently, the first device 110 may proceed to initiate connection creation with the second device 130 (block 350a) in response to the RSSI value exceeding the predefined RSSI threshold (hence indicating the second device 130 to be in close enough proximity, e.g. to be within a touching range) and may refrain from initiating the connection creation and continue operating the wireless communication apparatus of the wireless communication portion 112 in the discoverable state (block 330a) in response to the RSSI value failing to exceed the RSSI threshold (hence indicating the second device 130 not to be in close enough proximity, e.g. not to be within the touching range).

As an example, the methods 300a and 300b may be applied in context of the BT protocol. In such a scenario the employed wireless communication apparatuses in the wireless communication portions 112, 132 comprise respective BT transceivers arranged to operate according to the BT BR/EDR protocol and transmit/receive device discovery messages, device discovery response messages, connection request messages and connection request response messages according to the BT BR/EDR protocol.

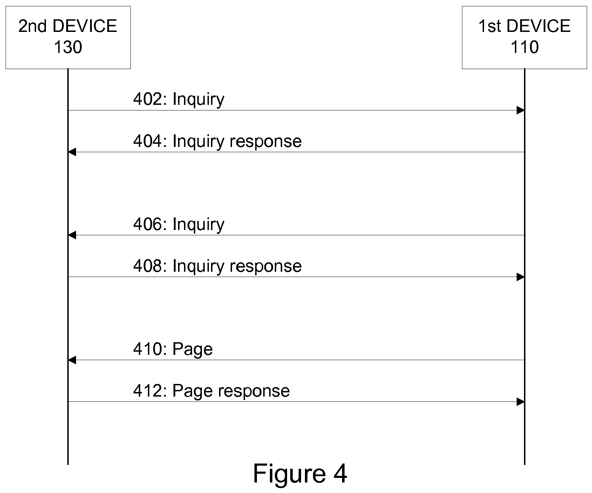

As an example of the BT BR/EDR signaling exchange in the framework of the methods 300a and 300b, Figure 4 illustrates exemplifying signaling exchange between respective wireless communication apparatuses of the wireless communication portions 112, 132 that each comprise a respective BT transceiver arranged to operate in accordance with the BT BR/EDR protocol.

In step 402, the second device 130 that is operating in the inquiry state transmits one or more inquiry messages (cf. block 310b), whereas in step 404 the first device 110 that is operating in the inquiry scan state (cf. blocks 310a, 320a) starts to operate (also) in the inquiry response state in response to the received inquiry message(s) and responds with one or more inquiry response messages (cf. block 325a). Optionally, e.g. after step 404, the first device 110 may receive one or more page messages from the second device 130, serving as a request for connection between the devices 110, 130. However, if received, the first device 110 ignores the page message(s) and hence refrains from accepting the connection requested by the second device 130. As a further response to receiving the inquiry message(s), in step 406 the first device 110 is operating in the inquiry state and it transmits one or more inquiry messages (cf. block 330a). In step 408 the second device 130 that is now operating in the inquiry scan state (cf. blocks 330b, 332b) responds to received inquiry message(s) by transmitting one or more inquiry response messages (cf. block 335b). The steps 406 and 408 may be repeated at least a predetermined number of times.

In case the information obtained in dependence of the inquiry response message(s) received from the second device 130 indicates that creation of a wireless connection with the second device 130 is to be initiated (cf. block 340a), the first device 110 may proceed to step 410 to transmit one or more page messages to the second device 130 (cf. block 350a). Consequently, in step 412 the second device 130 that is operating in the page scan state responds to received page message(s) by transmitting one or more page response messages to the first device 110 (cf. block 340b).

In the signaling exchange according the example of Figure 4, an inquiry message may comprise an ID packet, whereas the inquiry response message(s) may comprise a frequency hop synchronization (FHS) packet, which may be followed by an extended inquiry response (EIR) packet. Moreover, a page message may comprise an ID packet, whereas the page response message(s) may comprise a FHS packet, possibly followed by an EIR packet. These packet types and further details of the inquiry operation and the page operation according to the BT BR/EDR protocol are found e.g. in the Bluetooth Specification, vol. 2, Part B, Sections 8.3 and 8.4.

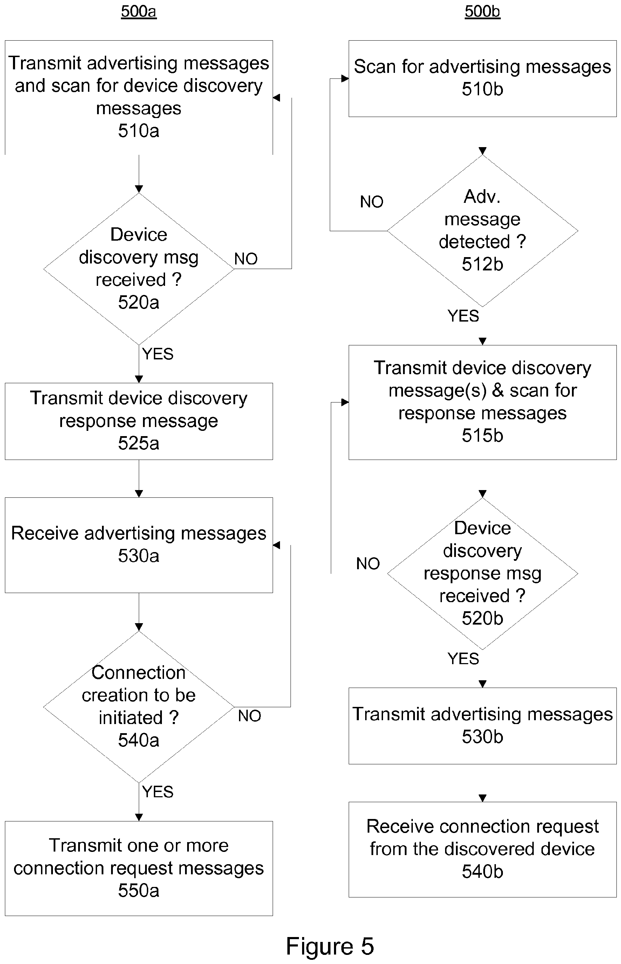

Figure 5 illustrates exemplifying methods 500a and 500b for facilitating establishment of a wireless connection between the first device 110 and the second device 130 in the framework of the methods 200a and 200b, respectively. The method 500a may be carried out, for example, in the first device 110 and the method 500b may be carried out, for example, in the second device 130.

The method 500a proceeds from the first device 110 operating in the discoverable state, which includes transmitting one or more advertising messages and scanning for device discovery messages from other devices, as indicated in block 510a. Hence, in context of the methods 500a and 500b the discoverable state may also be referred to as an advertising state. The advertising message(s) serve to indicate the presence of a device transmitting the messages and hence enable the other devices to discover the device. The advertising message(s) may further carry information related to the identity of the device and/or to one or more services available in the device transmitting the advertising message(s). The advertising messages transmitted from the first device 110 may indicate a non-connectable state, thereby indicating that the first device 110 is not currently connectable.

In parallel, the method 500b proceeds from the second device 130 operating in the discovering state, which includes scanning for advertising messages from other devices, as indicated in block 510b. In context of the methods 500a and 500b the discovering state may also be referred to as a scanning state. The discovering state of the second device 130 further comprises determining whether at least one advertising message has been received in the second device 130, as indicated in block 512b. Moreover, in response to finding determination of block 512b non-affirmative, the scanning for advertising messages (block 510b) is continued, whereas in response to the determination of block 512b being affirmative, the second device 130 proceeds to transmit one or more device discovery messages to the first device 110 and to scan for device discovery response messages, as indicated in block 515b. While operating in the discovering state, the second device 130 may at the same time operate in the connectable state by scanning for connection request messages from other devices.

In context of the methods 500a and 500b the device discovery message(s) serve as a request for information related to connection creation or establishment with a discovered device, whereas the device discovery response message(s) carry the requested connection creation or establishment information. A device discovery message and/or device discovery response message may carry an identification associated with the device 110, 130 transmitting the message, e.g. an address of the wireless communication apparatus of the wireless communication portion 112, 132 transmitting the message or a name associated with the wireless communication apparatus of the wireless communication portion 112, 132 and/or the respective device 110, 130.

The method 500a continues with the first device 110 determining whether it has been discovered by another device, which includes checking whether one or more device discovery messages from the second device 130 have been received, as indicated in block 520a. In response to finding the determination of block 520a non-affirmative, the first device 110 continues transmitting the advertising messages and scanning for the device discovery messages (block 510a). In response to finding the determination of block 520a affirmative, the first device 110 proceeds to transmit one or more device discovery response messages to the second device 130, as indicated in block 525a. Moreover, at this point of the method 500a the first device 110 also proceeds to the further signaling, which in the method 500a includes the first device (scanning for and) receiving advertising messages from other devices during its operation discovering state, as indicated in block 530a. At the same time, the first device 110 may continue to operate also in the discoverable state.

In parallel, the method 500b proceeds to the second device 130 determining whether it has discovered the first device 110, which comprises determining whether one or more device discovery response messages from the first device 110 have been received, as indicated in block 520b. The determination of block 520b may apply one or more further criteria, e.g. to determine whether the device discovery response messages have been received from another device of certain type and/or another device of certain identity (indicated e.g. an address or part thereof). In response to finding the determination of block 520b non-affirmative, the second device 130 continues transmitting the device discovery messages and scanning for the device discovery response messages (block 515b). As an example in this regard, the transmission/scanning (block 515b) and determining (block 520b) may be continued at most for a predefined period of time, after which, if the determination of block 520b continues to be non-affirmative, the second device 130 returns to scanning for advertising messages from other devices (block 510b). In response to finding the determination of block 520b affirmative, the second device 130 proceeds to operate or continues to operate in the discoverable state to carry out the further signaling, which in the method 500b comprises the second device 130 transmitting one or more advertising messages, as indicated in block 530b, and possibly also scanning for (and receiving) device discovery messages from other devices. The advertising messages transmitted from the second device 130 may indicate a connectable state, thereby indicating that the second device 130 is currently connectable.

In case the advertising messages received from the first device 110 do not indicate a non-connectable state (in other words, indicate a connectable state), the second device 130 may optionally request connection creation with the first device 110 by responding to the device discovery response message(s) by transmitting one or more connection request messages e.g. before proceeding to block 530b. In this regard, the first device 110 rejects the possible connection request by ignoring the connection request messages and hence refrains from responding with one or more connection request response messages.

Hence, in context of the method 500a and 500b the further signaling messages transmitted/received during the further signaling (cf. blocks 230a, 230b) comprise advertising messages transmitted from the second device 130. During or after the further signaling the first device 110 determines, in dependence of the advertising messages received at the first device 110, whether creation of a wireless connection with the second device 130 is to be initiated, as indicated in block 540a. In particular, this determination may depend on information the first device 110 receives in the advertising messages and/or information the first device 110 derives on basis of characteristics of one or more received advertising messages. Examples in this regard are described in the foregoing in context of the methods 200a and 300a. There may be a requirement that the method 500a proceeds to block 540a only after the first device 110 having received at least a predetermined number of advertising messages received from the first device 130.

In case the outcome of the determination of block 540a is non-affirmative, the first device 110 returns to transmitting advertising messages and scanning for device discovery messages from other devices (block 510a). As an example in this regard, the first device 110 may continue to operate in the discovering state (block 530a) at most for a predefined period of time, after which, if the determination of block 540a continues to be non-affirmative, the first device 110 may return to transmitting advertising messages and scanning for device discovery messages from other devices (block 510a). In response to finding the outcome of the determination of block 540a affirmative, the method 500a proceeds to the first device 110 initiating connection creation with the second device 130. This includes transmitting one or more connection request messages to the second device 130, as indicated in block 550a.

Consequently, the second device 130 may receive one or more connection request messages from the first device 110, as indicated in block 540b, and may proceed with initiation of the connection creation by transmitting one or more connection request response messages to the first device 110. The transmission of the connection request response messages may be followed by connection establishment and data transfer with the first device 110.

The determination whether creation of the wireless connection with the second device 130 is to be initiated in block 540a may be dependent on information the first device 110 receives in the advertising messages and/or information the first device 110 derives on basis of characteristics of one or more received advertising messages received from the second device 130 (blocks 530a, 530b). In this regard, the determination may be similar to that described in context of the method 300a, with the exception that the determination may be carried out e.g. in dependence of the identification of the second device received in an advertising message transmitted from the second device and/or the RSSI value derived in the first device 110 on basis of one or more advertising messages received from the second device 130.

As an example, the methods 500a and 500b may be applied in context of the BT protocol. In such a scenario the employed wireless communication apparatuses in the wireless communication portions 112, 132 comprise respective BT transceivers arranged to operate according to the BLE protocol and to transmit/receive the advertising messages, device discovery messages, device discovery response messages, connection request messages and connection request response messages according to the BLE protocol.

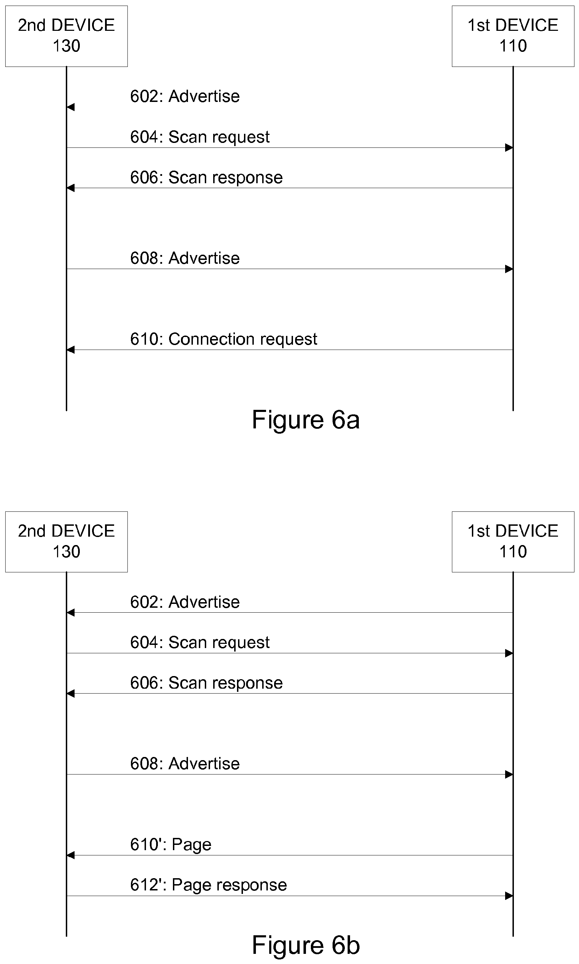

As an example of the BLE signaling exchange in the framework of the methods 500a and 500b, Figure 6a illustrates exemplifying signaling exchange between respective wireless communication apparatuses of the wireless communication portions 112, 132 that each comprise a respective BT transceiver arranged to operate in accordance with the BLE protocol.

In step 602, the first device 110 that is operating in the advertising state (the discoverable state) transmits one or more advertising messages (cf. block 510a). These advertising messages may comprise, for example, ADV_NONCONN_IND packets or ADV_SCAN_IND packets that indicate non-connectable discoverable state of the first device 110. In step 604, the second device 130 that is operating in the scanning state (the discovering state) transmits one or more scan request messages comprising SCAN_REQ packets to the first device 110 (cf. block 515b) in response to receiving at least one advertising message (cf. block 512b). In step 606 the first device 110 that is operating in the advertising state (cf. blocks 510a, 520a) transmits one or more scan response messages comprising SCAN_RSP packets to the second device 130 (cf. block 525a) and further starts to operate in the scanning state (cf. block 530a).

In step 608 the second device 130 that is operating in the advertising state transmits one or more advertising messages (cf. block 530b), e.g. at least a predefined number of advertising messages. These advertising messages may comprise, for example, ADV_IND or ADV_DIRECT_IND packets. In case the information derived in dependence of the advertising message(s) received from the second device 130 indicates that a wireless connection with the second device 130 is to be established (cf. block 540a), the first device 110 may proceed to step 610 to transmit one or more connection request messages comprising a CONNECT_REQ packet to the second device 130 (cf. block 550a), thereby initiating the connection creation with the second device 130.

The packet types of the BLE protocol referred to in the signaling exchange according the example of Figure 6a as well as other details of the operation in the advertising state, in the scanning state and in the connection creation phase are found e.g. in the Bluetooth Specification, vol. 6, Part B, Section 2.3.

The methods 300a, 300b, 500a and 500b may each be conceptually divided into three phases
- initial device discovery phase (blocks 310a to 325a of the method 300a, blocks 310b to 320b of the method 300b, blocks 510a to 525a of the method 500a and blocks 510b to 520b of the method 500b);
- further signaling phase (blocks 330a to 340a of the method 300a, blocks 330b to 335b of the method 300b, blocks 530a to 540a of the method 500a and block 530b of the method 500b); and
- connection creation phase (block 350a of the method 300a, block 340b of the method 300b, block 550a of the method 500a and block 540b of the method 500b).

Instead of employing either the method 300a (together with the method 300b) or the method 500a (together with the method 500b) as described in the foregoing, a combination of the methods 300a and 500a (together with a respective combination of the methods 300b and 500b) may be employed instead: one or two phases of the phases of the methods 300a and 500a outlined above (together with the respective phases of the methods 300b and 500b) may be carried out according to one of the methods 300a and 500a (together with the respective phases of the methods 300b and 500b) while the remaining phase(s) are carried out according to the other one of the methods 300a and 500a (together with the respective phases of the methods 300b and 500b).

As an example in this regard, the initial device discovery phase and the further signaling phase may be provided according to the methods 500a and 500b, whereas the connection creation phase may be provided according to the methods 300a and 300b. Such a method may be applied in context of the BT protocol such that the device discovery procedure(s) are carried out by transmitting/receiving the advertising messages, device discovery messages and device discovery response messages according to BLE protocol, while the connection creation or establishment may involve transmitting/receiving the connection request messages and connection request response messages according to the BT BR/EDR protocol.

An example of signaling exchange between respective wireless communication apparatuses of the wireless communication portions 112, 132 for such an approach is illustrated Figure 6b. Herein, steps 602 to 608 are identical to those described in context of Figure 6a, provided using the BLE protocol, whereas the subsequent steps are provided using the BT BR/EDR protocol. In case the information derived in dependence of the advertising message(s) received from the second device 130 indicates that a wireless connection with the second device 130 is to be established (cf. block 540a), the first device 110 may proceed to step 610' transmit one or more page messages to the second device 130 (cf. block 550a). Consequently, in step 612' the second device 130 that is operating in the page scan state responds to received page message(s) by transmitting one or more page response messages to the first device 110 (cf. block 540b).

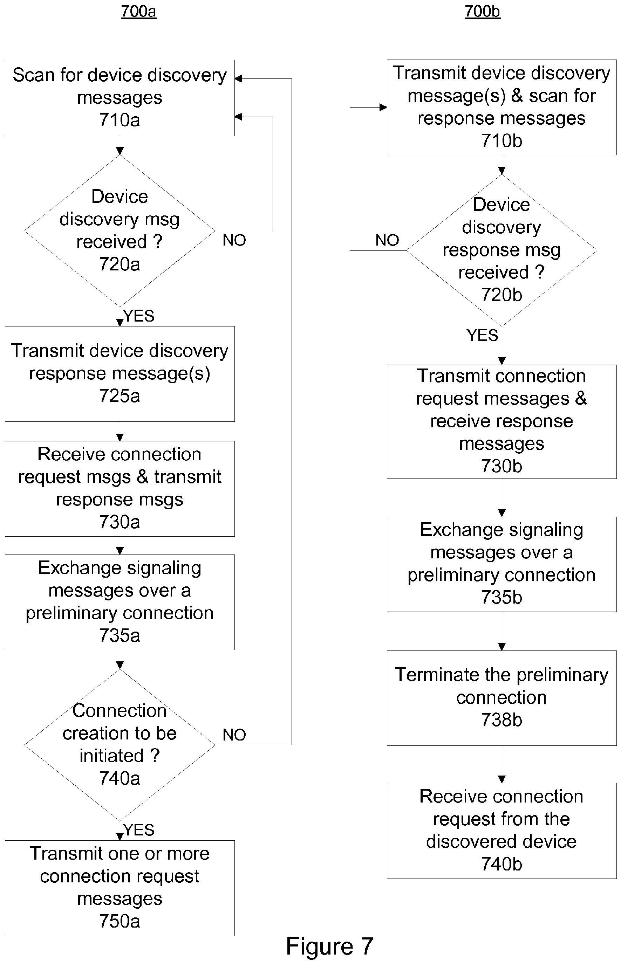

Figure 7 illustrates exemplifying methods 700a and 700b for facilitating establishment of a wireless connection between the first device 110 and the second device 130 in the framework of the methods 200a and 200b, respectively. The method 700a may be carried out, for example, in the first device 110 and the method 700b may be carried out, for example, in the second device 130.

The operations referred to in blocks 710a, 720a and 725a are, respectively, similar to those of blocks 310a, 320a and 325a described in context of the method 300a in the foregoing, whereas the operations referred to in blocks 710b and 720b are, respectively, similar to those of blocks 310b and 320b described in context of method 300b. However, in context of the method 700a the device discovery response message(s) transmitted from the first device (block 725a) do not carry a name associated with the first device 110. Such device discovery response messages triggers the receiving device to respond with one or more name request messages, thereby generating additional signaling messages for the other device to receive.

Continuing with description of the method 700b, the second device 130 transmits one or more connection request messages to the first device 110 and (scans for) and receives connection request response messages, as indicated in block 730b, in an attempt to establish a preliminary connection with the first device 110. In parallel, returning to the method 700a, when proceeding from block 725a to block 730, the first device 110 may already be operating in the connectable state or it may change to operate (also) in the connectable state. Herein, operation in the connectable state comprises scanning for connection request messages from other devices. In this regard, the method 700a may comprise the first device 110 receiving one or more connection request messages from the second device 130 and transmitting, in response thereto, one or more connection request response messages, as indicated in block 730a, thereby proceeding with establishing the preliminary connection with the second device 130 to enable carrying out the further signaling. Hence, in context of the methods 700a and 700b the further signaling messages exchanged during the further signaling (cf. blocks 230a, 230b) comprise one or more messages transmitted/received over the preliminary connection (blocks 735a, 735b).

Transmission of the connection request messages from the second device 130 (which may result in establishing the preliminary connection) may be triggered by any device discovery response message received from the first device 110. Alternatively, the transmission of the connection request messages from the second device 130 for establishing the preliminary connection for the further signaling may be triggered by an explicit indication or command included in at least one of the device discovery response messages (block 720b). Such an indication or command may be provided e.g. by setting a certain parameter included in the respective device discovery response message(s) to a predefined value or otherwise including a predefined indicator to the respective device discovery response message(s). This further signaling may comprise transmitting one or more messages that carry information concerning identity of the first device 110 and/or the second device 130 , e.g. at least one further request message transmitted from one of the devices 110, 130 and a respective response message transmitted from the other one of the devices 110, 130, where the at least one further request message and the respective response message carry information related to the identity of at least one of the devices 110, 130.

As an example, the further request messages may carry request(s) concerning an indication of the identity of the one of the devices 110, 130 whereas the respective response messages may carry an indication of the requested identity. As an example in this regard, the second device 130 may be caused to transmit a name request message to the first device 110 in response to the first device 110 having not included the name associated with the first device 110 in the device discovery response message(s) transmitted therefrom in context of operation of block 710a. Consequently, the first device 110 may respond to the name request message by transmitting to the second device 130 a name response message that includes the missing name. As another example, alternatively or additionally, the first device 110 may be caused to further respond to the name request message received from the second device 130 by transmitting a name request message to the second device 130, while the second device 130 may be caused to respond to the name request message from the first device 110 by transmitting a name response message that includes a name associated with the second device 130.

After the further signaling, e.g. after having received the name response message, one of the devices 110, 130, either the first device 110 or the second device 130, terminates the preliminary connection with the other device 110, 130. As an example, the termination of the preliminary connection may be initiated by the second device 130, as indicated in block 738b, after which the second device 130 starts or continues to operate in the connectable state.

During or after the further signaling the first device 110 determines, in dependence of the further signaling messages received from the second device 130 during the further signaling (block 735a), whether creation of a wireless connection with the second device 130 is to be initiated, as indicated in block 740a. In case the outcome of the determination of block 740a is non-affirmative, the first device 110 returns or continues to operate in the discoverable state (block 710) and may also continue to operate in the connectable state. In response to the outcome of the determination of block 740a being affirmative, the method 700a proceeds to the first device 110 initiating connection creation with the second device 130, which includes transmitting one or more connection request messages to the second device 130, as indicated in block 750a.

Consequently, the second device 130 may receive one or more connection request messages from the first device 110, as indicated in block 740b, and may proceed with connection creation by transmitting one or more connection request response messages to the first device 110. The transmission of the connection of the connection request response messages may be followed by connection creation or establishment and data transfer with the first device 110.

The determination whether creation of the wireless connection with the second device 130 is to be initiated in block 740a may comprise determination if the name request message from the second device 130 has been received. In other words, the first device 110 may proceed to initiate the connection creation after the further signaling (block 735a) without further considerations. Alternatively or additionally, the determination whether creation of the wireless connection with the second device 130 is to be initiated may be dependent on information the first device 110 receives in message(s) from the second device 130 over the preliminary connection (blocks 735a, 735b) and/or information the first device 110 derives on basis of characteristics of one or more messages received from the second device 130 over the preliminary connection (blocks 735a, 735b). In this regard, the determination may be similar to that described in context of the methods 300a and 500a, with the exception that the determination may be carried out e.g. in dependence of the identification of the second device received in a connection request message received from the second device 130 and/or the RSSI value derived on basis of one or more messages received from the second device 130 over the preliminary connection. As a further example in this regard, the identity-based determination whether creation of the wireless connection with the second device 130 is to be initiated may involve extracting the name associated with the second device 130 from a name response message received from the second device 130 and using the extracted name as the identity of the second device 130 that is presented to the user of the first device 110 together with an option to accept or decline connection with the second device 130.

As an example, the methods 700a and 700b may be applied in context of the BT protocol. In such a scenario the employed wireless communication apparatuses in the wireless communication portions 112, 132 comprise respective BT transceivers arranged to operate according to the BT BR/EDR protocol and transmit/receive device discovery messages, device discovery response messages, connection request messages and connection request response messages according to the BT BR/EDR protocol.

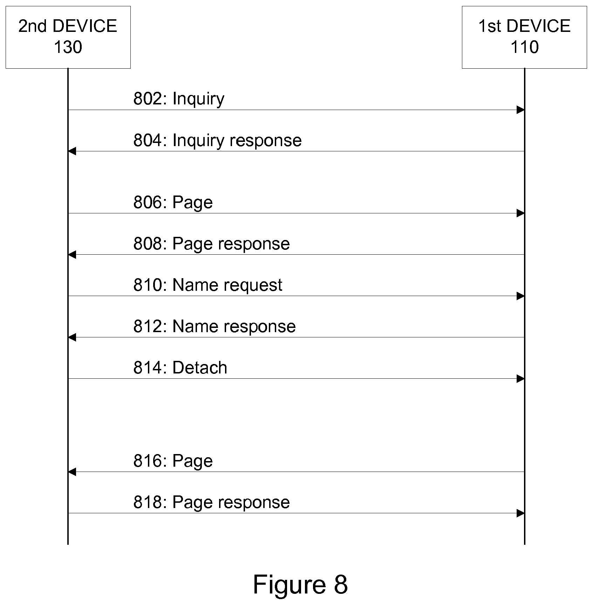

As an example of the BT BR/EDR signaling exchange in the framework of the methods 700a and 700b, Figure 8 illustrates exemplifying signaling exchange between respective wireless communication apparatuses of the wireless communication portions 112, 132 that each comprise a respective BT transceiver arranged to operate in accordance with the BT BR/EDR protocol.

In step 802, the second device 130 that is operating in the inquiry state transmits one or more inquiry messages (cf. block 710b), whereas in step 804 the first device 110 that is operating in the inquiry scan state (cf. blocks 710a, 720a) starts to operate (also) in the inquiry response state in response to the received inquiry message(s) and responds with one or more inquiry response messages (cf. block 725a) without including a name associated with the first device 110 in the inquiry response messages. Thereafter, the first device 110 operates (also or at least) in the page scan state (cf. block 730a) and the second device 130 operates (also or at least) in the page state (cf. block 730b).

In in step 806 the second device 130 transmits one or more page messages (cf. block 730b) and in step 808 the first device 110 responds to received page message(s) by transmitting one or more page response messages (cf. block 730a). Consequently, a preliminary connection between the devices 110, 130 is established. In step 810 the second device 130 responds with one or more name request messages, whereas in step 812 the first device 110 responds with a name response message that carries the name associated with the first device 110. Additionally or alternatively, the first device 110 may transmit one or more name request messages to the second device 130, which may respond by transmitting name request response messages that carries a name associated with the second device 130. In response to receiving the name response message, in step 814 the second device 130 terminates the preliminary connection by transmitting a detach message.

Thereafter, the second device 130 operates (also or at least) in the page scan state (cf. block 740b). In case the information derived in dependence of the page message(s) and any further signaling messages the first device 110 has received from the second device 130 while having operated in the page scan state indicates that a wireless connection with the second device 130 is to be established (cf. block 740a), the first device 110 may operate (also or at least) in the page state and transmit, in step 816, one or more page messages to the second device 130 (cf. block 750a). Consequently, in step 818 the second device 130 that is operating in the page scan state responds to received page message(s) by transmitting one or more page response messages to the first device 110 (cf. block 740b).

In the signaling exchange according the example of Figure 8, an inquiry message may comprise an ID packet, whereas the inquiry response message(s) may comprise a FHS packet, which may be followed by an EIR packet. Moreover, a page message may comprise an ID packet, whereas the page response message(s) may comprise a FHS packet. The name request message may comprise a LMP_name_req packet, the name response message may comprise a LMP_name_res packet, and the detach message may comprise a LMP_detach packet.

Referring back to components of the first device 110 and the second device 130, the processor 116 is configured to read from and write to the memory 115 and the processor 136 is configured to read from and write to the memory 135. Although the processor 116, 136 is described as a single component, the processor 116, 136 may be implemented as one or more separate components. Similarly, although the memory 115, 135 is described as a single component, the memory 115, 135 may be implemented as one or more separate components, some or all of which may be integrated/removable and/or may provide permanent / semi-permanent/ dynamic/cached storage.

The memory 115 may store the computer program 117 comprising computer-executable instructions that control the operation of the apparatus 110 when loaded into the processor 116. As an example, the computer program 117 may include one or more sequences of one or more instructions. The computer program 117 may be provided as a computer program code. The processor 116 is able to load and execute the computer program 117 by reading the one or more sequences of one or more instructions included therein from the memory 115. The one or more sequences of one or more instructions may be configured to, when executed by the processor 116, cause the apparatus 110 to carry out operations, procedures and/or functions described in the foregoing in context of the first device 110. Hence, the apparatus 110 may comprise at least one processor 116 and at least one memory 115 including computer program code for one or more programs, the at least one memory 115 and the computer program code configured to, with the at least one processor 116, cause the apparatus 110 to perform operations, procedures and/or functions described in the foregoing in context of the first device 110. Similar considerations are equally valid for the corresponding components 13x of the second device 130.

Each of the computer programs 117, 137 may be provided e.g. as a respective computer program product comprising at least one computer-readable non-transitory medium having program code stored thereon, the program code, when executed by the respective device or apparatus 110, 130, causes the apparatus at least to perform operations, procedures and/or functions described in the foregoing in context of the respective device 110, 130.

The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor should not be understood to encompass only programmable processors, but also dedicated circuits such as field-programmable gate arrays (FPGA), application specific circuits (ASIC), signal processors, etc. Features described in the preceding description may be used in combinations other than the combinations explicitly described. Although functions have been described with reference to certain features, those functions may be performable by other features whether described or not.

## Claims

1. A method (200a) for facilitating establishment of a wireless connection, the method comprising
receiving (210a, 220a), in a first device (110), one or more device discovery messages,
in response to the first device (110) receiving at least one device discovery message,
transmitting (230a), from the first device (110), one or more device discovery response messages to a source (130) of said at least one device discovery message, and
carrying out (230a) a further signaling with said source (130), said further signaling comprising the first device (110) receiving one or more further inbound signaling messages that carry information related to connection creation with said source (130); and
determining (240a), in the first device (110), in dependence of said one or more further signaling messages received from said source (130), whether a connection creation with said source (130) is to be initiated;
**characterized in that** the method comprises the following: in response to said determination being affirmative,
rejecting a connection request from said source by ignoring, in the first device, inbound connection request messages received from said source, and
transmitting (250a), from the first device, one or more outbound connection request messages to initiate the connection creation with said source.

2. A method according to claim 1, wherein
said device discovery messages comprise inquiry messages according to the Bluetooth Basic Rate / Enhanced Data Rate protocol, and
said device discovery response messages comprise inquiry response messages according to the Bluetooth Basic Rate / Enhanced Data Rate protocol.

3. A method according to claim 1, further comprising transmitting, from the first device, one or more advertising messages according to the Bluetooth Low Energy protocol, and wherein
said device discovery messages comprise scan request messages according to the Bluetooth Low Energy protocol received from said source in response to said advertising messages, and
said device discovery response messages comprise scan response messages according to the Bluetooth Low Energy protocol.

4. A method according to any of claims 1 to 3,
wherein carrying out said further signaling comprises transmitting, from the first device, one or more outbound device discovery messages; and
wherein said further inbound signaling messages comprise one or more device discovery response messages received from said source in response to said one or more outbound device discovery messages.

5. A method according to any of claims 1 to 3, wherein said one or more device discovery response messages transmitted from the first device do not carry a name associated with the first device,
further comprising receiving, in the first device, one or more inbound connection request messages from said source and transmitting, from the first device, one or more outbound connection response messages to said source to establish a preliminary connection with said source;
wherein said further signaling is carried out over said preliminary connection, wherein said further inbound signaling messages comprise one or more further request messages received from said source; and
wherein said determining whether a connection with said source is to be created comprises determining whether said one or more further request messages received from said source comprise a name request message.

6. A method according to claim 5,
wherein the further signaling comprises transmitting, from the first device, a name request message to said source and receiving a name response message from said source, said name response message including a name associated with said source; and
the method further comprises presenting, in the first device via an user interface, the name associated with said source together with an option to accept or decline connection with said source and receiving a user selection that indicates whether to accept or decline the connection,
wherein said determining whether a connection creation with said source is to be initiated comprises determining whether said user selection indicates acceptance of the connection.

7. A method according to any of claims 1 to 6, wherein said determining whether a connection creation with said source is to be initiated comprises one or more of the following:
determining whether a received signal strength indication value derived on basis of said one or more further signaling messages exceeds a predefined threshold; and
determining whether an identification of said source received in said one or more further inbound signaling messages indicates one of one or more predefined identities.

8. A computer program comprising computer readable program code configured to cause performing of the method of any of the claims 1 to 7 when said program code is run on a computing apparatus.

9. An apparatus (110) comprising
wireless communication means (112) configured to
receive one or more device discovery messages,
transmit, in response to receiving at least one device discovery message, one or more device discovery response messages to a source (130) of said at least one device discovery message, and
carry out, in response to receiving at least one device discovery message, a further signaling with said source (130), said further signaling comprising receiving one or more further inbound signaling messages that carry information related to connection creation with said source (130); and
evaluation means (115, 116, 117) for determining, in dependence of said one or more further signaling messages received from said source (130), whether a connection creation with said source (130) is to be initiated,
**characterized in that**n said wireless communication means (112) is further configured to, in response to said determination being affirmative,
reject a connection request from said source (130) by ignoring inbound connection request messages received from said source (130), and
transmit one or more outbound connection request messages to initiate the connection creation with said source (130).

10. An apparatus according to claim 9, wherein said wireless communication means is further configures to transmit one or more advertising messages, and wherein said device discovery messages comprise scan request messages received from said source in response to said advertising messages.

11. An apparatus according to any of claim 9 or 10,
wherein said further signaling further comprises transmitting one or more outbound device discovery messages; and
wherein said further inbound signaling messages comprise one or more device discovery response messages received from said source in response to said one or more outbound device discovery messages.

12. An apparatus according to any of claims 9 to 11, wherein said one or more device discovery response messages do not carry a name associated with the first device,
wherein said wireless communication means is further configured to receive one or more inbound connection request messages from said source and to transmit one or more outbound connection request response messages to said source to establish a preliminary connection with said source;
wherein said wireless communication means is further configured to carry out said further signaling over said preliminary connection, wherein said further inbound signaling messages comprise one or more further request messages received from said source; and
wherein said evaluation means is configured to determine whether said one or more further request messages received from said source comprise a name request message.

13. An apparatus according to claim 12,
wherein said further signaling comprises transmitting a name request message to said source and receiving a name response message from said source, said name response message including a name associated with said source;
wherein the apparatus further comprises user interface means for presenting the name associated with said source together with an option to accept or decline connection with said source and for receiving a user selection that indicates whether to accept or decline the connection,
wherein said evaluation means is configured to determine whether said user selection indicates acceptance of the connection.

14. An apparatus according to any of claims 9 to 13, wherein said evaluation means is configured to carry out one or more of the following:
determine whether a received signal strength indication value derived on basis of said one or more further signaling messages exceeds a predefined threshold; and
determine whether an identification of said source received in said one or more further inbound signaling messages indicates one of one or more predefined identities.

## Patentansprüche

1. Verfahren (200a) zum Erleichtern des Aufbauens einer drahtlosen Verbindung, wobei das Verfahren Folgendes umfasst:
Empfangen (210a, 220a) in einer ersten Vorrichtung (110) einer oder mehrerer Vorrichtungsentdeckungsnachrichten,
in Reaktion darauf, dass die erste Vorrichtung (110) wenigstens eine Vorrichtungsentdeckungsnachricht empfängt,
Senden (230a) von der ersten Vorrichtung (110) einer oder mehrerer Vorrichtungsentdeckungsantwortnachrichten zu einer Quelle (130) der wenigstens einen Vorrichtungsentdeckungsnachricht und
Ausführen (230a) einer weiteren Signalgebung mit der Quelle (130), wobei die weitere Signalgebung umfasst, dass die erste Vorrichtung (110) eine oder mehrere weitere eingehende Signalgebungsnachrichten empfängt, die Informationen bezüglich der Verbindungserzeugung mit der Quelle (130) führen; und
Bestimmen (240a) in der ersten Vorrichtung (110) in Abhängigkeit von der einen oder den mehreren weiteren Signalgebungsnachrichten, die von der Quelle (130) empfangen werden, ob eine Verbindungserzeugung mit der Quelle (130) eingeleitet werden soll;
**dadurch gekennzeichnet, dass** das Verfahren Folgendes umfasst: in Reaktion auf die Tatsache, dass die Bestimmung positiv ist,
Zurückweisen einer Verbindungsanforderung von der Quelle durch Ignorieren in der ersten Vorrichtung ankommender Verbindungsanforderungsnachrichten, die von der Quelle empfangen werden, und
Senden (250a) von der ersten Vorrichtung einer oder mehrerer ausgehender Verbindungsanforderungsnachrichten, um die Verbindungserzeugung mit der Quelle einzuleiten.

2. Verfahren nach Anspruch 1, wobei
die Vorrichtungsentdeckungsnachrichten Anfragenachrichten in Übereinstimmung mit dem Bluetooth-Basisratenprotokoll/verbesserten Bluetooth-Datenratenprotokoll enthalten und
die Vorrichtungsentdeckungsantwortnachrichten Anfrageantwortnachrichten in Übereinstimmung mit dem Bluetooth-Basisratenprotokoll/verbesserten Bluetooth-Datenratenprotokoll enthalten.

3. Verfahren nach Anspruch 1, das ferner das Senden von der ersten Vorrichtung einer oder mehrerer Ankündigungsnachrichten in Übereinstimmung mit dem Bluetooth-Niedrigenergieprotokoll umfasst, wobei
die Vorrichtungsentdeckungsnachrichten Abtastanforderungsnachrichten in Übereinstimmung mit dem Bluetooth-Niedrigenergieprotokoll, die von der Quelle in Reaktion auf die Ankündigungsnachrichten empfangen werden, umfassen und
die Vorrichtungsentdeckungsantwortnachrichten Abtastantwortnachrichten in Übereinstimmung mit dem Bluetooth-Niedrigenergieprotokoll umfassen.

4. Verfahren nach einem der Ansprüche 1 bis 3,
wobei das Ausführen der weiteren Signalgebung das Senden von der ersten Vorrichtung einer oder mehrerer ausgehender Vorrichtungsentdeckungsnachrichten umfasst; und
wobei die weiteren eingehenden Signalgebungsnachrichten eine oder mehrere Vorrichtungsentdeckungsantwortnachrichten enthalten, die von der Quelle in Reaktion auf die eine oder die mehreren ausgehenden Vorrichtungsentdeckungsnachrichten empfangen werden.

5. Verfahren nach einem der Ansprüche 1 bis 3, wobei die eine oder die mehreren Vorrichtungsentdeckungsantwortnachrichten, die von der ersten Vorrichtung gesendet werden, keinen der ersten Vorrichtung zugeordneten Namen führen,
das ferner Folgendes umfasst: Empfangen in der ersten Vorrichtung einer oder mehrerer eingehender Verbindungsanforderungsnachrichten von der Quelle und Senden von der ersten Vorrichtung einer oder mehrerer ausgehender Verbindungsantwortnachrichten zu der Quelle, um eine vorläufige Verbindung mit der Quelle aufzubauen;
wobei die weitere Signalgebung über die vorläufige Verbindung ausgeführt wird, wobei die weiteren eingehenden Signalgebungsnachrichten eine oder mehrere weitere Anforderungsnachrichten, die von der Quelle empfangen werden, enthalten; und
wobei das Bestimmen, ob eine Verbindung mit der Quelle erzeugt werden soll, das Bestimmen, ob die eine oder die mehreren weiteren Anforderungsnachrichten, die von der Quelle empfangen werden, eine Namenanforderungsnachricht enthalten, umfasst.

6. Verfahren nach Anspruch 5,
wobei die weitere Signalgebung das Senden von der ersten Vorrichtung einer Namenanforderungsnachricht zu der Quelle und das Empfangen einer Namenantwortnachricht von der Quelle umfasst, wobei die Namenantwortnachricht einen der Quelle zugeordneten Namen enthält; und
wobei das Verfahren ferner umfasst: Darstellen in der ersten Vorrichtung über eine Anwenderschnittstelle des Namens, der der Quelle zugeordnet ist, zusammen mit einer Option, die Verbindung mit der Quelle anzunehmen oder abzulehnen, und Empfangen einer Anwenderauswahl, die angibt, ob die Verbindung angenommen oder abgelehnt werden soll,
wobei das Bestimmen, ob eine Verbindungserzeugung mit der Quelle eingeleitet werden soll, das Bestimmen, ob die Anwenderauswahl die Annahme der Verbindung angibt, umfasst.

7. Verfahren nach einem der Ansprüche 1 bis 6, wobei das Bestimmen, ob eine Verbindungserzeugung mit der Quelle eingeleitet werden soll, einen oder mehrere der folgenden Schritte umfasst:
Bestimmen, ob ein Angabewert der Stärke des empfangenen Signals, der anhand der einen oder der mehreren weiteren Signalgebungsnachrichten abgeleitet wird, einen im Voraus definierten Schwellenwert überschreitet; und
Bestimmen, ob eine Kennung der Quelle, die in der einen oder den mehreren weiteren eingehenden Signalgebungsnachrichten empfangen wird, eine oder mehrere im Voraus definierte Kennungen angibt.

8. Computerprogramm, das computerlesbaren Programmcode enthält, der konfiguriert ist, die Ausführung des Verfahrens nach einem der Ansprüche 1 bis 7 zu bewirken, wenn der Programmcode auf einer Computervorrichtung läuft.

9. Vorrichtung (110), die Folgendes umfasst:
drahtlose Kommunikationsmittel (112), die konfiguriert sind,
eine oder mehrere Vorrichtungsentdeckungsnachrichten zu empfangen,
in Reaktion auf den Empfang wenigstens einer Vorrichtungsentdeckungsnachricht eine oder mehrere Vorrichtungsentdeckungsantwortnachrichten zu einer Quelle (130) der wenigstens einen Vorrichtungsentdeckungsnachricht zu senden und
in Reaktion auf den Empfang wenigstens einer Vorrichtungsentdeckungsnachricht eine weitere Signalgebung mit der Quelle (130) auszuführen, wobei die weitere Signalgebung das Empfangen einer oder mehrerer weiterer eingehender Signalgebungsnachrichten, die Informationen bezüglich einer Verbindungserzeugung mit der Quelle (130) führen, umfasst; und
Bewertungsmittel (115, 116, 117) zum Bestimmen in Abhängigkeit von der einen oder den mehreren weiteren Signalgebungsnachrichten, die von der Quelle (130) empfangen werden, ob eine Verbindungserzeugung mit der Quelle (130) eingeleitet werden soll,
**dadurch gekennzeichnet, dass** die drahtlosen Kommunikationsmittel (112) ferner in Reaktion auf die Tatsache, dass die Bestimmung positiv ist, konfiguriert sind,
eine Verbindungsanforderung von der Quelle (130) durch Ignorieren eingehender Verbindungsanforderungsnachrichten, die von der Quelle (130) empfangen werden, zurückzuweisen und
eine oder mehrere ausgehende Verbindungsanforderungsnachrichten zu senden, um die Verbindungserzeugung mit der Quelle (130) einzuleiten.

10. Vorrichtung nach Anspruch 9, wobei die drahtlosen Kommunikationsmittel ferner konfiguriert sind, eine oder mehrere Ankündigungsnachrichten zu senden, und wobei die Vorrichtungsentdeckungsnachrichten Abtastanforderungsnachrichten enthalten, die von der Quelle in Reaktion auf die Ankündigungsnachrichten empfangen werden.

11. Vorrichtung nach einem der Ansprüche 9 oder 10,
wobei die weitere Signalgebung ferner das Senden einer oder mehrerer ausgehender Vorrichtungsentdeckungsnachrichten umfasst; und
wobei die weiteren eingehenden Signalgebungsnachrichten eine oder mehrere Vorrichtungsentdeckungsantwortnachrichten enthalten, die von der Quelle in Reaktion auf die eine oder die mehreren ausgehenden Vorrichtungsentdeckungsnachrichten empfangen werden.

12. Vorrichtung nach einem der Ansprüche 9 bis 11, wobei die eine oder die mehreren Vorrichtungsentdeckungsantwortnachrichten einen der ersten Vorrichtung zugeordneten Namen führen,
wobei die drahtlosen Kommunikationsmittel ferner konfiguriert sind, eine oder mehrere eingehende Verbindungsanforderungsnachrichten von der Quelle zu empfangen und eine oder mehrere ausgehende Verbindungsanforderungsantwortnachrichten zu der Quelle zu senden, um eine vorläufige Verbindung mit der Quelle aufzubauen;
wobei die drahtlosen Kommunikationsmittel ferner konfiguriert sind, eine weitere Signalgebung über die vorläufige Verbindung auszuführen, wobei die weiteren eingehenden Signalgebungsnachrichten eine oder mehrere weitere Anforderungsnachrichten, die von der Quelle empfangen werden, enthalten; und
wobei die Bewertungsmittel konfiguriert sind, zu bestimmen, ob die eine oder die mehreren weiteren Anforderungsnachrichten, die von der Quelle empfangen werden, eine Namenanforderungsnachricht enthalten.

13. Vorrichtung nach Anspruch 12,
wobei die weitere Signalgebung das Senden einer Namenanforderungsnachricht zu der Quelle und das Empfangen einer Namenantwortnachricht von der Quelle umfasst, wobei die Namenantwortnachricht einen der Quelle zugeordneten Namen enthält;
wobei die Vorrichtung ferner Anwenderschnittstellenmittel umfasst, um den der Quelle zugeordneten Namen zusammen mit einer Option, die Verbindung mit der Quelle anzunehmen oder abzulehnen, darzustellen und eine Anwenderauswahl, die angibt, ob die Verbindung angenommen oder abgelehnt werden soll, zu empfangen,
wobei die Bewertungsmittel konfiguriert sind, zu bestimmen, ob die Anwenderauswahl die Annahme der Verbindung angibt.

14. Vorrichtung nach einem der Ansprüche 9 bis 13, wobei die Bewertungsmittel konfiguriert sind, einen oder mehrere der folgenden Schritte auszuführen:
Bestimmen, ob ein Angabewert für die Stärke eines empfangnen Signals, der anhand der einen oder der mehreren weiteren Signalgebungsnachrichten abgeleitet wird, einen im Voraus definierten Schwellenwert überschreitet; und
Bestimmen, ob eine Kennung der Quelle, die in der einen oder den mehreren weiteren eingehenden Signalgebungsnachrichten empfangen wird, eine oder mehrere im Voraus definierte Kennungen angibt.

## Revendications

1. Procédé (200a) permettant de faciliter l'établissement d'une connexion sans fil, le procédé comprenant les étapes consistant à :
recevoir (210a, 220a), dans un premier dispositif (110), un ou plusieurs messages de découverte de dispositif,
en réponse au premier dispositif (110) qui reçoit au moins un message de découverte de dispositif,
transmettre (230a), à partir du premier dispositif (110), un ou plusieurs messages de réponse de découverte de dispositif à une source (130) dudit au moins un message de découverte de dispositif, et
mettre en oeuvre (230a) une signalisation supplémentaire avec ladite source (130), ladite signalisation supplémentaire comprenant le premier dispositif (110) qui reçoit un ou plusieurs messages de signalisation entrants supplémentaires qui acheminent des informations liées à la création d'une connexion avec ladite source (130) ; et
déterminer (240a), dans le premier dispositif (110), en fonction desdits un ou plusieurs messages de signalisation supplémentaires reçus de ladite source (130), si une création de connexion avec ladite source (130) doit être initiée ;
**caractérisé en ce que** le procédé comprend ce qui suit : en réponse à ladite détermination qui est affirmative,
rejeter une demande de connexion de ladite source en ignorant, dans le premier dispositif, des messages de demande de connexion entrants reçus de ladite source, et
transmettre (250a), à partir du premier dispositif, un ou plusieurs messages de demande de connexion sortants pour initier la création de connexion avec ladite source.

2. Procédé selon la revendication 1, dans lequel
lesdits messages de découverte de dispositif comprennent des messages d'interrogation en fonction du protocole de vitesse de base Bluetooth/de vitesse de données améliorées, et
lesdits messages de réponse de découverte de dispositif comprennent des messages de réponse d'interrogation en fonction du protocole de vitesse de base Bluetooth/de vitesse de données améliorées.

3. Procédé selon la revendication 1, consistant en outre à transmettre, à partir du premier dispositif, un ou plusieurs messages publicitaires en fonction du protocole Bluetooth basse énergie, et dans lequel
lesdits messages de découverte de dispositif comprennent des messages de demande de balayage en fonction du protocole Bluetooth basse énergie reçus de ladite source en réponse auxdits messages publicitaires, et
lesdits messages de réponse de découverte de dispositif comprennent des messages de réponse de balayage en fonction du protocole Bluetooth basse énergie.

4. Procédé selon l'une quelconque des revendications 1 à 3,
dans lequel mettre en oeuvre ladite signalisation supplémentaire consiste à transmettre, à partir du premier dispositif, un ou plusieurs messages de découverte de dispositif sortants ; et
dans lequel lesdits messages de signalisation entrants supplémentaires comprennent un ou plusieurs messages de réponse de découverte de dispositif reçus de ladite source en réponse auxdits un ou plusieurs messages de découverte de dispositif sortants.

5. Procédé selon l'une quelconque des revendications 1 à 3, dans lequel lesdits un ou plusieurs messages de réponse de découverte de dispositif transmis depuis le premier dispositif n'acheminent pas un nom associé au premier dispositif,
consistant en outre à recevoir, dans le premier dispositif, un ou plusieurs messages de demande de connexion entrants provenant de ladite source et à transmettre, du premier dispositif, un ou plusieurs messages de réponse de connexion sortants à ladite source pour établir une connexion préliminaire avec ladite source ;
dans lequel ladite signalisation supplémentaire est mise en oeuvre sur ladite connexion préliminaire, dans lequel lesdits messages de signalisation entrants supplémentaires comprennent un ou plusieurs messages de demande supplémentaires reçus de ladite source ; et
dans lequel ladite détermination concernant si une connexion avec ladite source doit être créée consiste à déterminer si lesdits un ou plusieurs messages de demande supplémentaires reçus de ladite source comprennent un message de demande de nom.

6. Procédé selon la revendication 5,
dans lequel la signalisation supplémentaire consiste à transmettre, à partir du premier dispositif, un message de demande de nom à ladite source et à recevoir un message de réponse de nom provenant de ladite source, ledit message de réponse de nom comprenant un nom associé à ladite source ; et
le procédé consiste en outre à présenter, dans le premier dispositif par le biais d'une interface utilisateur, le nom associé à ladite source conjointement avec une option pour accepter ou refuser une connexion avec ladite source, et à recevoir une sélection d'un utilisateur qui indique s'il faut accepter ou refuser la connexion,
dans lequel ladite détermination concernant si une création de connexion avec ladite source doit être initiée consiste à déterminer si ladite sélection de l'utilisateur indique l'acceptation de la connexion.

7. Procédé selon l'une quelconque des revendications 1 à 6, dans lequel ladite détermination concernant si une création de connexion avec ladite source doit être initiée comprend un ou plusieurs éléments de ce qui suit :
déterminer si une valeur d'indication d'intensité de signal reçue trouvée sur la base desdits un ou plusieurs messages de signalisation supplémentaires dépasse un seuil prédéfini ; et
déterminer si une identification de ladite source reçue dans lesdits un ou plusieurs messages de signalisation entrants supplémentaires indique l'une parmi une ou plusieurs identités prédéfinies.

8. Programme informatique comprenant un code de programme lisible par ordinateur conçu pour entraîner l'exécution du procédé selon l'une quelconque des revendications 1 à 7 lorsque ledit code de programme est exécuté sur un appareil informatique.

9. Appareil (110) comprenant
un moyen de communication sans fil (112) conçu pour
recevoir un ou plusieurs messages de découverte de dispositif,
transmettre, en réponse à la réception d'au moins un message de découverte de dispositif, un ou plusieurs messages de réponse de découverte de dispositif à une source (130) dudit au moins un message de découverte de dispositif, et
mettre en oeuvre, en réponse à la réception d'au moins un message de découverte de dispositif, une signalisation supplémentaire avec ladite source (130), ladite signalisation supplémentaire consistant à recevoir un ou plusieurs messages de signalisation entrants supplémentaires qui acheminent des informations liées à la création de connexion avec ladite source (130) ; et
un moyen d'évaluation (115, 116, 117) permettant de déterminer, en fonction desdits un ou plusieurs messages de signalisation supplémentaires reçus de ladite source (130), si une création de connexion avec ladite source (130) doit être initiée ;
**caractérisé en ce que** ledit moyen de communication sans fil (112) est conçu en outre pour, en réponse à ladite détermination qui est affirmative,
rejeter une demande de connexion de ladite source (130) en ignorant des messages de demande de connexion entrants reçus de ladite source (130), et
transmettre un ou plusieurs messages de demande de connexion sortants pour initier la création de connexion avec ladite source (130).

10. Appareil selon la revendication 9, dans lequel ledit moyen de communication sans fil est conçu en outre pour transmettre un ou plusieurs messages publicitaires, et dans lequel lesdits messages de découverte de dispositif comprennent des messages de demande de balayage reçus de ladite source en réponse auxdits messages publicitaires.

11. Appareil selon l'une quelconque des revendications 9 ou 10,
dans lequel ladite signalisation supplémentaire consiste en outre à transmettre un ou plusieurs messages de découverte de dispositif sortants ; et
dans lequel lesdits messages de signalisation entrants supplémentaires comprennent un ou plusieurs messages de réponse de découverte de dispositif reçus de ladite source en réponse auxdits un ou plusieurs messages de découverte de dispositif sortants.

12. Appareil selon l'une quelconque des revendications 9 à 11, dans lequel lesdits un ou plusieurs messages de réponse de découverte de dispositif n'acheminent pas un nom associé au premier dispositif,
dans lequel ledit moyen de communication sans fil est conçu en outre pour recevoir un ou plusieurs messages de demande de connexion entrants provenant de ladite source, et pour transmettre un ou plusieurs messages de réponse de demande de connexion sortants à ladite source pour établir une connexion préliminaire avec ladite source ;
dans lequel ledit moyen de communication sans fil est conçu en outre pour mettre en oeuvre ladite signalisation supplémentaire sur ladite connexion préliminaire, dans lequel lesdits messages de signalisation entrants supplémentaires comprennent un ou plusieurs messages de demande supplémentaires reçus de ladite source ; et
dans lequel ledit moyen d'évaluation est conçu pour déterminer si lesdits un ou plusieurs messages de demande supplémentaires reçus de ladite source comprennent un message de demande de nom.

13. Appareil selon la revendication 12,
dans lequel ladite signalisation supplémentaire consiste à transmettre un message de demande de nom à ladite source et à recevoir un message de réponse de nom provenant de ladite source, ledit message de réponse de nom comprenant un nom associé à ladite source ;
dans lequel l'appareil comprend en outre un moyen d'interface d'utilisateur permettant de présenter le nom associé à ladite source conjointement avec une option pour accepter ou refuser une connexion avec ladite source, et de recevoir une sélection d'un utilisateur qui indique s'il faut accepter ou refuser la connexion,
dans lequel ledit moyen d'évaluation est conçu pour déterminer si ladite sélection de l'utilisateur indique l'acceptation de la connexion.

14. Appareil selon l'une quelconque des revendications 9 à 13, dans lequel ledit moyen d'évaluation est conçu pour mettre en oeuvre un ou plusieurs éléments de ce qui suit :
déterminer si une valeur d'indication d'intensité de signal reçue trouvée sur la base desdits un ou plusieurs messages de signalisation supplémentaires dépasse un seuil prédéfini ; et
déterminer si une identification de ladite source reçue dans lesdits un ou plusieurs messages de signalisation entrants supplémentaires indique l'une parmi une ou plusieurs identités prédéfinies.
